# EUROPÄISCHE PATENTSCHRIFT

(11) **EP 1 940 887 B1**
(45) Veröffentlichungstag und Bekanntmachung des Hinweises auf die Patenterteilung: **03.03.2010**
(21) Anmeldenummer: 06807231.3
(22) Anmeldetag: 13.10.2006
(51) Int. Cl.: C08F 8/00

(54) **SILAN-MODIFIZIERTE DISPERSIONSPULVER**
SILANE-MODIFIED DISPERSION POWDER
POUDRE POUR DISPERSION MODIFIEE PAR DU SILANE

(30) Priorität: 27.10.2005 DE 102005051588
(43) Veröffentlichungstag der Anmeldung: 09.07.2008
(73) Patentinhaber: Wacker Chemie AG, 81737 München (DE)
(72) Erfinder: KILLAT, Marion, 84489 Burghausen (DE); KILLAT, Stefan, 84489 Burghausen (DE)
(74) Vertreter: Schuderer, Michael
(86) Internationale Anmeldenummer: PCT/EP2006/067366
(87) Internationale Veröffentlichungsnummer: WO 2007/048714

(56) Entgegenhaltungen:
- EP-A1- 0 857 772
- EP-A2- 0 863 191
- EP-A2- 1 134 255
- EP-A2- 1 153 979
- FR-A1- 2 749 007

## Beschreibung

Die Erfindung betrifft Silan-modifizierte, in Wasser redispergierbare Polymerpulver-Zusammensetzungen, und die Verwendung dieser Pulver in hydraulisch abbindenden Systemen.

Polymerisate auf Basis von Vinylester, Vinylchlorid, (Meth)-acrylatmonomeren, Styrol, Butadien und Ethylen werden vor allem in Form deren wässriger Dispersionen oder in Wasser redispergierbarer Polymerpulver in vielerlei Anwendungen, beispielsweise als Beschichtungsmittel oder Klebemittel, für die unterschiedlichsten Substrate eingesetzt. Dispersionspulver finden auch Verwendung als Bindemittel in hydraulisch abbindenden Beschichtungen oder in Klebstoffen wie Fliesenklebern, in WDVS-Mörteln (WDVS = Wärmedämmverbundsystem), in Putzen oder Fugenmassen auf Basis von Zementen oder Gips.

Aus der DE 4402408 A1 ist bekannt, zur Hydrophobierung von in Wasser redispergierbaren Dispersionspulver-Zusammensetzungen, bei der Polymerisation in Wasser dispergierbare Organosiliciumverbindungen zuzugeben und die damit erhältlichen Polymerdispersionen anschließend mittels Sprühtrocknung zu trocknen. In der DE 4402409 A1 wird vorgeschlagen, zum Erhalt von hydrophobierten Redispersionspulvern die entsprechende Polymerdispersion und in Wasser dispergierbare Siliciumverbindungen gemeinsam zu versprühen. In der DE 10040407 A1 werden Polymerdispersionen für Fliesenklebstoffe mit silanhaltigen Verbindungen und mit (Thio)harnstoffverbindungen modifiziert. Dazu werden Silan-funktionelle und (Thio)harnstoff-funktionelle Monomere copolymerisiert oder niedermolekulare Verbindungen mit entsprechenden Funktionalitäten eingesetzt. Aus der EP 640630 A1 ist bekannt, zur Herstellung von Klebemassen mit verbesserter Nasshaftung wässrige Dispersionen von Polymerisaten einzusetzen, welche Monomereinheiten enthalten, die sich von Vinylsilanen ableiten. Wässrige Polymerdispersionen mit Silan-funktionellen Polymerisaten für die Anwendung in Fliesenklebern sind auch aus der DE-OS 2148456 und der EP 0035332 A2 bekannt.

In der Fliesenherstellung ist ein Trend zu dichteren Fliesen wie beispielsweise Feinsteinzeugfliesen oder porzellanartigen Fliesen festzustellen. Die Wasseraufnahme und Porosität dieser Fliesen ist stark verringert; im Allgemeinen beträgt deren Wasseraufnahme weniger als 0.2 Gew.-% bezogen auf das Gewicht der Fliese. Dadurch werden die Möglichkeiten des anorganischen Bindemittels im Fliesenkleber mit der Fliesenunterseite eine feste Bindung einzugehen, stark verringert. Es wird der Einsatz eines weiteren organischen Bindemittels, eines Dispersionspulvers oder einer Dispersion benötigt, um die Haftung und Flexibilität des Fliesenklebers zu verbessern. Um eine ausreichende Verklebung zu gewährleisten, müssen daher für Steinzeug- oder Feinsteinzeugbeläge immer höhere Einsatzmengen an Polymer verwendet werden.

Es bestand daher die Aufgabe, ein Dispersionspulver zu entwickeln, das eine gute Verklebung von Fliesen ermöglicht, bevorzugt von Feinsteinzeugfliesen oder porzellanartigen Fliesen mit einer Wasseraufnahme von kleiner als 0.2 Gew.-%, besonders bevorzugt für Feinsteinzeugfliesen mit einer Wasseraufnahme von kleiner als 0.05 Gew.-%.

Gegenstand der Erfindung sind in Wasser redispergierbare Polymerpulver-Zusammensetzung erhältlich mittels radikalisch initiierter Polymerisation in wässrigem Medium von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide, und anschließender Trocknung der dabei erhaltenen Polymerdispersion, **dadurch gekennzeichnet, dass** vor oder während der Polymerisation oder vor der Trocknung der Polymerdispersion ein oder mehrere Silane der allgemeinen Formel

(RO)₃₋ₙR¹ₙSiR²X (1),

zugegeben werden, in der
R einen gegebenenfalls substituierten Alkyl-, Aryl- oder Alkoxyalkylrest mit 1 bis 10 Kohlenstoffatomen,
R¹ einen gegebenenfalls substituierten Kohlenwasserstoffrest mit 1 bis 12 Kohlenstoffatomen,
R² einen gegebenenfalls substituierten Alkylen-Rest mit 1 bis 20 Kohlenstoffatomen, in dem einander nicht benachbarte Methyleneinheiten durch Gruppen -O- ersetzt sein können,
X einen Aminorest NHR³ oder einen Epoxyrest CR⁴(O)CR⁵R⁶ bedeutet, wobei
R³ einen gegebenenfalls substituierten Alkyl-, Aryl- oder Aminoalkyrest mit 1 bis 10 Kohlenstoffatomen und
n den Wert 0, 1, 2 oder 3 bedeuten, und
R⁴, R⁵, R⁶ Wasserstoff oder einen gegebenenfalls substituierten Alkyl- oder Arylrest mit 1 bis 10 Kohlenstoffatomen bedeuten.

Vorzugsweise bedeutet R Methyl, Ethyl oder Propyl.

Im allgemeinen sind die Reste R¹ nicht substituiert. Vorzugsweise bedeutet R¹ einen Kohlenwasserstoffrest mit 1 bis 6 Kohlenstoffatomen, insbesondere Methyl, Ethyl, Propyl, Vinyl oder Phenyl.

Im allgemeinen sind die Reste R² nicht substituiert. Vorzugsweise bedeutet R² einen Alkylen-Rest mit 1 bis 6 Kohlenstoffatomen, insbesondere Methylen, Ethylen, Propylen.

Vorzugsweise bedeutet R³ einen Kohlenwasserstoffrest mit 1 bis 6 Kohlenstoffatomen, besonders bevorzugt 2-Aminoethyl, Phenyl, Cyclohexyl, Methyl, Ethyl, Propyl und Butyl.

R⁴, R⁵, R⁶ bedeuten bevorzugt Wasserstoff.

Alle vorstehenden Symbole der vorstehenden Formeln weisen ihre Bedeutungen jeweils unabhängig voneinander auf. In allen Formeln ist das Siliciumatom vierwertig.

Die Silane der Formel (1) werden in Mengen von 0.5 bis 50 Gew.-%, bevorzugt 1 bis 30 Gew.-%, besonders bevorzugt 2 bis 15 Gew.-%, bezogen auf das Gesamtgewicht der in Wasser redispergierbaren Polymerpulver-Zusammensetzung, eingesetzt. Bevorzugt werden Aminopropyltrialkoxysilane der allgemeinen Formel (1) und Glycidoxypropyltrialkoxysilane der allgemeinen Formel (1) eingesetzt.

Besonders bevorzugt werden (3-Aminopropyl)triethoxysilan, (3-Aminopropyl)trimethoxysilan, N-(2-Aminoethyl)(3-Aminopropyl)-triethoxysilan, N-(2-Aminoethyl)(3-Aminopropyl)trimethoxysilan, N-(2-Aminoethyl)(3-Aminopropyl)methyldimethoxysilan, 3-(Triethoxysilyl)propylbernsteinsäureanhydrid, N-Cyclohexylaminomethylmethyldiethoxysilan, N-(3-(Triethoxysilyl)propyl)-methylurethan, N-(3-(Trimethoxysilyl)propyl)-methylurethan, N-(3-(Triethoxysilyl)propyl)-harnstoff, N-(3-(Trimethoxysilyl)-propyl)-harnstoff, (3-Glycidoxypropyl)triethoxysilan, und (3-Glycidoxypropyl)trimethoxysilan.

Die erfindungsgemäß eingesetzten Silane der Formel (1) sind handelsübliche Produkte oder in der Siliziumchemie nach gängigen Methoden herstellbar, beispielsweise nach Verfahren wie sie in Noll, Chemie und Technologie der Silikone, 2. Auflage 1968, Weinheim, und in Houben-Weyl, Methoden der organischen Chemie, Band E20, Georg Thieme Verlag, Stuttgart (1987) beschrieben sind. Die genannten Silane der Formel (1) können alleine oder als Gemisch eingesetzt werden.

Für die Herstellung des Basispolymerisats geeignete Vinylester sind solche von Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 13 C-Atomen, beispielsweise VeoVa9^{R} oder VeoVa10^{R} (Handelsnamen der Firma Resolution). Besonders bevorzugt ist Vinylacetat.

Geeignete Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Bevorzugt sind Methylacrylat, Methylmethacrylat, n-Butylacrylat und 2-Ethylhexylacrylat.

Beispiele für Olefine und Diene sind Ethylen, Propylen und 1,3-Butadien. Geeignete Vinylaromaten sind Styrol und Vinyltoluol. Ein geeignetes Vinylhalogenid ist Vinylchlorid.

Gegebenenfalls können noch 0.05 bis 50 Gew.-%, vorzugsweise 1 bis 10 Gew.-%, bezogen auf das Gesamtgewicht des Basispolymerisats, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat. Weitere Beispiele sind auch Vinylether, wie Methyl-, Ethyl- oder iso-Butylvinylether.

Beispiele für geeignete Homo- und Mischpolymerisate sind Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate, welche gegebenenfalls noch Hilfsmonomere enthalten können.

Bevorzugt werden Vinylacetat-Homopolymerisate; Mischpolymerisate von Vinylacetat mit 1 bis 40 Gew.-% Ethylen; Mischpolymerisate von Vinylacetat mit 1 bis 40 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9^{R}, VeoVa10^{R}, Veovall^{R}; Mischpolymerisate von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesondere n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 13 C-Atomen,sowie 1 bis 30 Gew.-% Acrylsäureester von unverzweigten oder verzweigten Alkoholen mit 1 bis 15 C-Atomen, insbesondere n-Butylacrylat.oder 2-Ethylhexylacrylat, welche noch 1 bis 40 Gew.-% Ethylen enthalten; Mischpolymerisate mit Vinylacetat, 1 bis 40 Gew.-% Ethylen und 1 bis 60 Gew.-% Vinylchlorid; wobei die Polymerisate noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat und gegebenenfalls Ethylen; Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen; Styrol-1,3-Butadien-Copolymerisate; wobei die Polymerisate noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, dass im allgemeinen eine Glasübergangstemperatur Tg von -50°C bis +50°C, vorzugsweise -30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Homo- und Mischpolymerisate erfolgt nach dem Emulsionspolymerisationsverfahren oder nach dem Suspensionspolymerisationsverfahren, vorzugsweise nach dem Emulsionspolymerisationsverfahren, wobei die Polymerisationstemperatur im Allgemeinen 40°C bis 100°C, vorzugsweise 60°C bis 90°C beträgt. Bei der Copolymerisation von gasförmigen Comonomeren wie Ethylen, 1,3-Butadien oder Vinylchlorid kann auch unter Druck, im Allgemeinen zwischen 5 bar und 100 bar, gearbeitet werden.

Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im Allgemeinen in einer Menge von 0.001 bis 0.02 Gew.-%, vorzugsweise 0.001 bis 0.01 Gew.-%, jeweils bezogen auf das Gesamtgewicht der Monomere, eingesetzt.

Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt im allgemeinen 0.001 bis 0.03 Gew.-%, vorzugsweise 0.001 bis 0.015 Gew.-%, jeweils bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Geeignete Schutzkolloide für die Polymerisation sind Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate, Dextrine und Cyclodextrine; Proteine wie Kasein oder Kaseinat, Sojaprotein, Gelatine; Ligninsulfonate; synthetische Polymere wie Poly(meth)-acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Bevorzugt sind auch teilverseifte, hydrophob modifizierte Polyvinylalkohole mit einem Hydrolysegrad von 80 bis 95 Mol-% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie E-then und Decen. Der Anteil der hydrophoben Einheiten beträgt vorzugsweise 0.1 bis 10 Gew.-%, bezogen auf das Gesamtgewicht des teilverseiften Polyvinylalkohols. Es können auch Gemische der genannten Polyvinylalkohole eingesetzt werden.

Am meisten bevorzugt werden Polyvinylalkohole mit einem Hydrolysegrad von 85 bis 94 Mol-% und einer Höpplerviskosität, in 4 %-iger wässriger Lösung von 3 bis 15 mPas (Methode nach Höppler bei 20°C, DIN 53015). Die genannten Schutzkolloide sind mittels dem Fachmann bekannter Verfahren zugänglich und werden im Allgemeinen in einer Menge von insgesamt 1 bis 20 Gew.-%, bezogen auf das Gesamtgewicht der Monomere, bei der Polymerisation zugesetzt.

Wird in Gegenwart von Emulgatoren polymerisiert, beträgt deren Menge 1 bis 5 Gew.-% bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Die Silane der Formel (1) können vor der Polymerisation vorgelegt werden oder während der Polymerisation zugegeben werden. Im allgemeinen erfolgt die Zugabe in reiner Form oder in Form einer wässrigen Lösung oder als wässrige Dispersion.

Nach Abschluss der Polymerisation kann zur Restmonomerentfernung in Anwendung bekannter Methoden nachpolymerisiert werden, im Allgemeinen durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden. Die damit erhältlichen wässrigen Polymerispersionen haben einen Feststoffgehalt von 30 bis 75 Gew.-%, vorzugsweise von 50 bis 60 Gew.-%.

Vorzugsweise werden die Silane der Formel (1) nach Abschluß der Polymerisation der Polymerdispersion in reiner Form oder in Form einer wässrigen Lösung oder als wässrige Dispersion zugemischt.

Zur Herstellung der in Wasser redispergierbaren Polymerpulver werden die wässrigen Dispersionen, gegebenenfalls nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage, Tg des Harzes und gewünschtem Trocknungsgrad, gewählt.

In der Regel wird das Trocknungshilfsmittel (Schutzkolloid) in einer Gesamtmenge von 3 bis 30 Gew.-%, bezogen auf die polymeren Bestandteile der Dispersion, eingesetzt. Bevorzugt werden 5 bis 20 Gew.-% bezogen auf den Polymeranteil eingesetzt.

Geeignete Trocknungshilfsmittel sind teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Kasein oder Kaseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden keine weiteren Schutzkolloide als Polyvinylalkohole als Trocknungshilfsmittel eingesetzt, wobei die als Schutzkolloide bevorzugten Polyvinylalkohole auch bevorzugt als Trocknungshilfsmittel eingesetzt werden.

Bei der Trocknung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Metakaolin, calciniertes Kaolin, Silicate mit Teilchengrößen vorzugsweise im Bereich von 10 nm bis 100 µm.

Die Viskosität der zu trocknenden Speise wird über den Feststoffgehalt so eingestellt, dass ein Wert von < 1500 mPas (Brookfield-Viskosität bei 20 Umdrehungen und 23°C), bevorzugt < 500 mPas, erhalten wird. Der Feststoffgehalt der zu trocknenden Mischung beträgt > 35 %, bevorzugt > 40 %.

Zur Verbesserung der anwendungstechnischen Eigenschaften können bei der Trocknung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Die in Wasser redispergierbaren Polymerpulver-Zusammensetzungen können in den dafür typischen Anwendungsbereichen eingesetzt werden. Sie können alleine oder in Kombination mit herkömmlichen Polymerdispersionen oder Dispersionspulvern eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben. Weitere Anwendungen sind Spritzmörtel und Spritzbeton für Bauwerke des Hoch- und Tiefbaues sowie der Auskleidung von Tunnelwänden.

Bevorzugte Anwendungsgebiete sind Fliesenkleber für Fliesen, besonders bevorzugt für Fliesen mit geringer Wasseraufnahme, am meisten bevorzugt für Fliesen mit einer Wasseraufnahme von kleiner als 0.2 Gew.-%, insbesondere kleiner als 0.05 Gew.-%.

Überraschenderweise werden bei dem erfindungsgemäßen Vorgehen Dispersionspulver erhalten, die die Haftung von Fliesen und insbesondere von Feinsteinzeugfliesen deutlich verbessern, ohne dass höhere Einsatzmengen an Dispersionspulver nötig werden.

### Beispiele:

### Pulver:

Die Pulver wurden durch Sprühtrocknung einer polyvinylalkoholstabilisierten Dispersion eines Ethylen-Vinylacetat-Copolymeren unter Zusatz von 6 Gew.-% eines Polyvinylalkoholes mit einem Verseifungsgrad von 88 Mol-% und einer Viskosität nach Höppler von 4 mPas und unter Zusatz des Silanderivates hergestellt.
Die Mischung wurde dann mittels Zweistoffdüse versprüht. Als Verdüsungskomponente diente auf 4 bar vorgepreßte Luft, die gebildeten Tropfen wurden mit auf 125°C erhitzter Luft im Gleichstrom getrocknet. Das erhaltene trockene Pulver wurde mit 15 Gew.-% handelsüblichem Antiblockmittel versetzt.

| | |
|---|---|
| Pulver P1: | Mit 8 Gew.-% (3-Aminopropyl)triethoxysilan |
| Pulver P2: | Mit 8 Gew.-% N-(2-Aminoethyl)(3-aminopropyl)-trimethoxysilan |
| Pulver P3: | Mit 8 Gew.-% (3-Glycidoxypropyl)trimethoxysilan |
| Vergleichspulver VP4: | Ohne Silan-Zusatz |
| Vergleichspulver VP5: | Mit 8 Gew.-% Isooctyltriethoxysilan |

### Ausprüfung:

Die erhaltenen Pulver wurden auf ihre Pulvereigenschaften und auf die Verarbeitung und Haftung in einem zementären Fliesenkleber untersucht.

### Bestimmung der Blockfestigkeit BF:

Zur Bestimmung der Blockfestigkeit wurde das Dispersionspulver in ein Eisenrohr mit Verschraubung gefüllt und danach mit einem Metallstempel belastet. Unter Belastung wurde im Trockenschlank 16 Stunden bei 50°C gelagert. Nach dem Abkühlen auf Raumtemperatur wurde das Pulver aus dem Rohr entfernt und die Blockstabilität qualitativ durch Zerdrücken des Pulvers bestimmt. Die Blockstabilität wurde wie folgt klassifiziert:
1 = sehr gute Blockstabilität
2 = gute Blockstabilität
3 = befriedigende Blockstabilität
4 = nicht blockstabil, Pulver nach Zerdrücken nicht mehr rieselfähig.

### Bestimmung des Absitzverhaltens RA:

Das Absitzverhalten der Redispersion dient als Maß für die Redispergierbarkeit der Pulvers. Die Redispersionen wurden 50 %-ig in Wasser durch Einwirkung von starken Scherkräften erzeugt.
Das Absitzverhalten wurde dann an verdünnten Redispersionen (0.5 % % Festgehalt) bestimmt, und dazu 100 ml dieser Dispersion in eine graduierte Röhre gefüllt, und die Absitzhöhe an Feststoff gemessen. Die Angabe erfolgt in mm Absitz nach 24 Stunden. Werte größer 7 zeigen eine unzureichende Redispersion des Pulvers an.

Bestimmung der Haftzugfestigkeiten HZ eines mit den Dispersionspulvern modifizierten, zementären Fliesenklebers:
Die Haftzugfestigkeiten und Verarbeitung wurden in folgender Rezeptur überprüft (6 Gew.-% Polymerpulveranteil):

| | |
|---|---|
| Quarzsand | 514 Gew.-Teile |
| Zement (Portland-/Aluminat-Zementmischung) | 420 Gew.-Teile |
| Celluloseether | 4 Gew.-Teile |
| Verzögerer/Beschleuniger | 2 Gew.-Teile |
| Dispersionspulver | 60 Gew.-Teile |

Der Trockenmörtel wurde mit 22 bis 24 Gew.-Teilen Wasser bezogen auf 100 Gew.-Teile Trockenmischung angerührt.

### Vergleichsbeispiel FK1: Pulver VP4 und Silan

Obige Rezeptur wurde angemischt, jedoch wurden statt 60 Gew.-Teilen Dispersionspulver 56 Gew.-Teile des Pulvers VP4 eingesetzt und dem Anmachwasser 4 Gew.-Teile N-(2-Aminoethyl)(3-aminopropyl)trimethoxysilan,zugegeben.

### Vergleichsbeispiel FK2: Nur Silan

Obige Rezeptur wurde angemischt, jedoch wurde kein Dispersionspulver eingesetzt. Dem Anmachwasser wurden 4 Gew.-Teile N-(2-Aminoethyl)(3-aminopropyl)trimethoxysilan zugegeben.

Es wurden die Haftzugfestigkeiten mit Feinsteinzeugfliesen in N/mm² (Fliese 1: Wasseraufnahme < 0.2 Gew.-%; Fliese 2: Wasseraufnahme < 0.05 Gew.-%) nach folgenden Lagerbedingungen bestimmt:

| | |
|---|---|
| 7d NK/21d H₂O: | 7 Tage Normklima/21 Tage Nasslagerung; |
| 14d NK/14d 70°C/1d NK: | 14 Tage Normklima/14 Tage 70°C/1 Tag Normklima |

Die Ergebnisse der Prüfung der Blockfestigkeit BF, des Absitzverhaltens RA der Dispersionspulver und die Ergebnisse der Haftzugfestigkeiten und Verarbeitung der Fliesenkleber sind in Tabelle 1 zusammengefasst.

Aus den Daten ist zu erkennen, dass die Pulvereigenschaften bei den erfindungsgemäßen Produkten nicht verschlechtert werden, die anwendungstechnischen Werte sich aber deutlich verbessern. Insbesondere bei der Verklebung der Feinsteinzeugfliese mit einer Wasseraufnahme < 0.05 Gew.-% (Fliese 2) ist die Haftung mit den erfindungsgemäß modifizierten Pulvern (P1 bis P3) deutlich besser als mit Rezepturen, welche herkömmliche Redispersionspulver enthalten (VP4). Die mit den erfindungsgemäß modifizierten Pulvern erhaltenen Haftungswerte werden auch mit nachträglicher Zugabe von Silan der Formel (1) zum Trockenmörtel (FK1) nicht erreicht.

**Tabelle 1:**

| Bsp | BF | RA | 7d NK/21d H₂O | | 14dNK/14d70°C/ldNK | | Verarbeitung |
|---|---|---|---|---|---|---|---|
| | | | Fliese 1 | Fliese 2 | Fliese 1 | Fliese 2 | |
| P1 | 1 | 3.3 | 0.93 | 0.92 | 1.46 | 0.71 | leichtgängig |
| P2 | 1 | 4.0 | 1.25 | 0.81 | 1.58 | 0.62 | leichtgängig, verflüssigt leicht |
| P3 | 2 | 5.5 | 1.06 | 0.95 | 1.64 | 0.76 | leichtgängig |
| VP4 | 1 | 2.8 | 0.82 | 0.38 | 1.82 | 0.44 | leichtgängig, leichtes Nachdicken |
| VP5 | 3 | 5.2 | 0.72 | 0.43 | 1.59 | 0.45 | Schwergängig, schlecht zu benetzen |
| FK1 | - | - | 0.90 | 0.70 | 1.40 | 0.51 | leichtgängig |
| FK2 | - | - | 0.42 | 0.17 | 0.23 | 0.0 | Relativ leichtgängig |

## Patentansprüche

1. In Wasser redispergierbare Polymerpulver-Zusammensetzung erhältlich mittels radikalisch initiierter Polymerisation in wässrigem Medium von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide, und anschließender Trocknung der dabei erhaltenen Polymerdispersion, **dadurch gekennzeichnet, dass** nach Abschluß der Polymerisation und vor der Trocknung der Polymerdispersion ein oder mehrere Silane der allgemeinen Formel
(RO)₃₋ₙR¹ₙSiR²X (1),
zugegeben werden, in der
R einen gegebenenfalls substituierten Alkyl-, Aryl- oder Alkoxyalkylrest mit 1 bis 10 Kohlenstoffatomen,
R¹ einen gegebenenfalls substituierten Kohlenwasserstoffrest mit 1 bis 12 Kohlenstoffatomen,
R² einen gegebenenfalls substituierten Alkylen-Rest mit 1 bis 20 Kohlenstoffatomen, in dem einander nicht benachbarte Methyleneinheiten durch Gruppen -O- ersetzt sein können,
X einen Aminorest NHR³ oder einen Epoxyrest CR⁴(O)CR⁵R⁶ bedeutet, wobei
R³ einen gegebenenfalls substituierten Alkyl-, Aryl- oder Aminoalkyrest mit 1 bis 10 Kohlenstoffatomen und n den Wert 0, 1, 2 oder 3 bedeuten, und
R⁴, R⁵, R⁶ Wasserstoff oder einen gegebenenfalls substituierten Alkyl- oder Arylrest mit 1 bis 10 Kohlenstoffatomen bedeuten.

2. In Wasser redispergierbare Polymerpulver-Zusammensetzung gemäß Anspruch 1, **dadurch gekennzeichnet, dass** die Silane der Formel (1) in Mengen von 0.5 bis 50 Gew.-%, bezogen auf das Gesamtgewicht der in Wasser redispergierbaren Polymerpulver-Zusammensetzung, eingesetzt werden.

3. In Wasser redispergierbare Polymerpulver-Zusammensetzung nach Anspruch 1 oder 2, **dadurch gekennzeichnet, dass** Aminopropyltrialkoxysilane der allgemeinen Formel (1) oder Glycidoxypropyltrialkoxysilane der allgemeinen Formel (1) eingesetzt werden.

4. In Wasser redispergierbare Polymerpulver-Zusammensetzung nach Anspruch 1 oder 2, **dadurch gekennzeichnet, dass** ein oder mehrere Silane der Formel (1) eingesetzt werden aus der Gruppe umfassend (3-Aminopropyl)triethoxysilan, (3-Aminopropyl)trimethoxysilan, N-(2-Aminoethyl)(3-Aminopromethoxysilan, N-(2-Aminoethyl)(3-Aminopropyl)methyldimethoxysilan, 3-(Triethoxysilyl)propylbernsteinsäureanhydrid, N-Cyclohexylaminomethylmethyldiethoxysilan, N-(3-(Triethoxysilyl)propyl)-methylurethan, N-(3-(Trimethoxysilyl)propyl)-methylurethan, N-(3-(Triethoxysilyl)-propyl)-harnstoff, N-(3-(Trimethoxysilyl)propyl)-harnstoff, (3-Glycidoxypropyl)triethoxysilan, und (3-Glycidoxypropyl)trimethoxysilan.

5. Verfahren zur Herstellung von in Wasser redispergierbaren Polymerpulver-Zusammensetzungen mittels radikalisch initiierter Polymerisation in wässrigem Medium von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide, und anschließender Trocknung der dabei erhaltenen Polymerdispersion, **dadurch gekennzeichnet, dass** nach Abschluß der Polymerisation und vor der Trocknung der Polymerdispersion ein oder mehrere Silane der allgemeinen Formel
(RO)₃₋ₙR¹ₙSiR²X (1),
zugegeben werden, in der
R einen gegebenenfalls substituierten Alkyl-, Aryl- oder Alkoxyalkylrest mit 1 bis 10 Kohlenstoffatomen,
R¹ einen gegebenenfalls substituierten Kohlenwasserstoffrest mit 1 bis 12 Kohlenstoffatomen,
R² einen gegebenenfalls substituierten Alkylen-Rest mit 1 bis 20 Kohlenstoffatomen, in dem einander nicht benachbarte Methyleneinheiten durch Gruppen -O- ersetzt sein können,
X einen Aminorest NHR³ oder einen Epoxyrest CR⁴(O)CR⁵R⁶ bedeutet, wobei
R³ einen gegebenenfalls substituierten Alkyl-, Aryl- oder Aminoalkyrest mit 1 bis 10 Kohlenstoffatomen und den Wert 0, 1, 2 oder 3 bedeuten, und
R⁴, R⁵, R⁶ Wasserstoff oder einen gegebenenfalls substituierten Alkyl- oder Arylrest mit 1 bis 10 Kohlenstoffatomen bedeuten.

6. Verfahren nach Anspruch 5, **dadurch gekennzeichnet, dass** die Silane der Formel (1) vor der Polymerisation vorgelegt werden oder während der Polymerisation zugegeben werden.

7. Verfahren nach Anspruch 5, **dadurch gekennzeichnet, dass** die Silane der Formel (1) nach Abschluß der Polymerisation der Polymerdispersion in reiner Form oder in Form einer wässrigen Lösung oder als wässrige Dispersion zugemischt werden.

8. Verwendung der in Wasser redispergierbaren Polymerpulver-Zusammensetzungen nach Anspruch 1 bis 4 in bauchemischen Produkten, in Verbindung mit hydraulisch abbindenden Bindemitteln wie Zementen, Gips und Wasserglas.

9. Verwendung der in Wasser redispergierbaren Polymerpulver-Zusammensetzungen nach Anspruch 1 bis 4 für die Herstellung von Bauklebern, insbesondere Fliesenkleber und Vollwärmeschutzkleber, Putzen, Scim-coat, Spachtelmasse, Fußbodenspachtelmassen, Verlaufsmassen, Dichtschlämmen, Fugenmörtel, Farben, sowie Spritzmörtel und Spritzbeton für Bauwerke des Hoch- und Tiefbaues und die Auskleidung von Tunnelwänden.

10. Verwendung der in Wasser redispergierbaren Polymerpulver-Zusammensetzungen nach Anspruch 1 bis 4 als Fliesenkleber für Fliesen mit einer Wasseraufnahme von kleiner als 0.2 Gew.-%.

11. Verwendung der in Wasser redispergierbaren Polymerpulver-, Zusammensetzungen nach Anspruch 1 bis 4 als Fliesenkleber für Fliesen mit einer Wasseraufnahme von kleiner als 0.05 Gew.-%.

## Claims

1. Water-redispersible polymer powder composition obtainable by means of free-radical-initiated polymerization in aqueous medium of one or more monomers from the group consisting of vinyl esters of unbranched or branched alkylcarboxylic acids having from 1 to 15 carbon atoms, methacrylic esters and acrylic esters of alcohols having from 1 to 15 carbon atoms, vinylaromatics, olefins, dienes and vinyl halides and subsequent drying of the polymer dispersion thus obtained, **characterized in that** one or more silanes of the general formula
(RO)₃₋ₙR¹ₙSiR²X (1),
where
R is a substituted or unsubstituted alkyl, aryl or alkoxyalkyl radical having from 1 to 10 carbon atoms,
R¹ is a substituted or unsubstituted hydrocarbon radical having from 1 to 12 carbon atoms,
R² is a substituted or unsubstituted alkylene radical having from 1 to 20 carbon atoms in which nonadjacent methylene units can be replaced by -O-groups,
X is an amino radical NHR³ or an epoxy radical CR⁴(O)CR⁵R⁶, where
R³ is a substituted or unsubstituted alkyl, aryl or aminoalkyl radical having from 1 to 10 carbon atoms and
n is 0, 1, 2 or 3 and
R⁴, R⁵, R⁶ are each hydrogen or a substituted or unsubstituted alkyl or aryl radical having from 1 to 10 carbon atoms,
are added after conclusion of the polymerization and before drying of the polymer dispersion.

2. Water-redispersible polymer powder composition according to Claim 1, **characterized in that** the silanes of the formula (1) are used in amounts of from 0.5 to 50% by weight, based on the total weight of the water-redispersible polymer powder composition.

3. Water-redispersible polymer powder composition according to Claim 1 or 2, **characterized in that** aminopropyltrialkoxysilanes of the general formula (1) or glycidoxypropyltrialkoxysilanes of the general formula (1) are used.

4. Water-redispersible polymer powder composition according to Claim 1 or 2, **characterized in that** one or more silanes of the formula (1) from the group consisting of (3-aminopropyl)triethoxysilane, (3-aminopropyl)trimethoxysilane, N-(2-aminoethyl)(3-aminopropyl)triethoxysilane, N-(2-aminoethyl)(3-aminopropyl)trimethoxysilane, N-(2-aminoethyl)(3-aminopropyl)methyldimethoxysilane, 3-(triethoxysilyl)propylsuccinic anhydride, N-cyclohexylaminomethylmethyldiethoxysilane, N-(3-(triethoxysilyl)propyl)methylurethane, N-(3-(trimethoxysilyl)propyl)methylurethane, N-(3-(triethoxysilyl)propyl)urea, N-(3-(trimethoxysilyl)propyl)urea, (3-glycidoxypropyl)triethoxysilane and (3-glycidoxypropyl)trimethoxysilane are used.

5. Process for producing water-redispersible polymer powder compositions by means of free-radical-initiated polymerization in aqueous medium of one or more monomers from the group consisting of vinyl esters of unbranched or branched alkylcarboxylic acids having from 1 to 15 carbon atoms, methacrylic esters and acrylic esters of alcohols having from 1 to 15 carbon atoms, vinylaromatics, olefins, dienes and vinyl halides and subsequent drying of the polymer dispersion thus obtained, **characterized in that** one or more silanes of the general formula
(RO)₃₋ₙR¹ₙSiR²X (1),
where
R is a substituted or unsubstituted alkyl, aryl or alkoxyalkyl radical having from 1 to 10 carbon atoms,
R¹ is a substituted or unsubstituted hydrocarbon radical having from 1 to 12 carbon atoms,
R² is a substituted or unsubstituted alkylene radical having from 1 to 20 carbon atoms in which nonadjacent methylene units can be replaced by -O-groups,
X is an amino radical NHR³ or an epoxy radical CR⁴(O)CR⁵R⁶, where
R³ is a substituted or unsubstituted alkyl, aryl or aminoalkyl radical having from 1 to 10 carbon atoms and
n is 0, 1, 2 or 3 and
R⁴, R⁵, R⁶ are each hydrogen or a substituted or unsubstituted alkyl or aryl radical having from 1 to 10 carbon atoms,
are added after conclusion of the polymerization and before drying of the polymer dispersion.

6. Process according to Claim 5, **characterized in that** the silanes of the formula (1) are initially charged prior to the polymerization or are added during the polymerization.

7. Process according to Claim 5, **characterized in that** the silanes of the formula (1) are, after conclusion of the polymerization, mixed into the polymer dispersion in pure form or in the form of an aqueous solution or as an aqueous dispersion.

8. Use of the water-redispersible polymer powder compositions according to any of Claims 1 to 4 in building chemical products, in combination with hydraulically setting binders such as cements, gypsum plaster and water glass.

9. Use of the water-redispersible polymer powder compositions according to any of Claims 1 to 4 for the production of building adhesives, in particular tile adhesives and thermal insulation adhesives, plasters and renders, scimcoat, knifing fillers, flooring compositions, self-levelling screeds, sealing slurries, jointing mortars, paints and also gunned mortar and gunned concrete for building and construction and the lining of tunnel walls.

10. Use of the water-redispersible polymer powder compositions according to any of Claims 1 to 4 as tile adhesives for tiles having a water absorption of less than 0.2% by weight.

11. Use of the water-redispersible polymer powder compositions according to any of Claims 1 to 4 as tile adhesives for tiles having a water absorption of less than 0.05% by weight.

## Revendications

1. Composition de poudre de polymère redispersable dans l'eau, pouvant être obtenue par polymérisation à amorçage radicalaire, en milieu aqueux, d'un ou plusieurs monomères choisi(s) dans le groupe comprenant des esters vinyliques d'acides alkylcarboxyliques ramifiés ou non ramifiés ayant de 1 à 15 atomes de carbone, des esters d'acide méthacrylique et des esters d'acide acrylique d'alcools ayant de 1 à 15 atomes de carbone, des composés vinylaromatiques, des oléfines, des diènes et des halogénures de vinyle, et séchage subséquent de la dispersion de polymère ainsi obtenue, **caractérisée en ce qu'**après la fin de la polymérisation et avant le séchage de la dispersion de polymère on ajoute un ou plusieurs silanes de formule générale
(RO)₃₋ₙR¹ₙSiR²X (1),
dans laquelle
R représente un radical alkyle, aryle ou alcoxyalkyle éventuellement substitué, ayant de 1 à 10 atomes de carbone,
R¹ représente un radical hydrocarboné éventuellement substitué, ayant de 1 à 12 atomes de carbone,
R² représente un radical alkylène éventuellement substitué, ayant de 1 à 20 atomes de carbone, dans lequel des groupes méthylène non contigus peuvent être remplacés par des groupes -O-,
X représente un radical amino NHR³ ou un radical époxy CR⁴(O)CR⁵R⁶,
R³ représentant un radical alkyle, aryle ou aminoalkyle éventuellement substitué, ayant de 1 à 10 atomes de carbone et
n a la valeur 0, 1, 2 ou 3, et
R⁴, R⁵, R⁶ représentent un atome d'hydrogène ou un radical alkyle ou aryle éventuellement substitué, ayant de 1 à 10 atomes de carbone.

2. Composition de poudre de polymère redispersable dans l'eau selon la revendication 1, **caractérisée en ce que** les silanes de formule (1) sont utilisés en quantités de 0,5 à 50 % en poids, par rapport au poids total de la composition de poudre de polymère redispersable dans l'eau.

3. Composition de poudre de polymère redispersable dans l'eau selon la revendication 1 ou 2, **caractérisée en ce qu'**on utilise des aminopropyltrialcoxysilanes de formule générale (1) ou des glycidoxypropyltrialcoxysilanes de formule générale (1).

4. Composition de poudre de polymère redispersable dans l'eau selon la revendication 1 ou 2, **caractérisée en ce qu'**on utilise un ou plusieurs silanes de formule (1) choisi(s) dans le groupe comprenant le (3-aminopropyl)triéthoxysilane, le (3-aminopropyl)triméthoxysilane, le N-(2-aminoéthyl)(3-aminopropyl)triéthoxysilane, le N-(2-aminoéthyl)(3-aminopropyl)triméthoxysilane, le N-(2-aminoéthyl)(3-aminopropyl)méthyldiméthoxysilane, l'anhydride 3-(triéthoxysilyl)propylsuccinique, le N-cyclohexylaminométhylméthyldiéthoxysilane, le N-(3-(triéthoxysilyl)propyl)-méthyluréthanne, le N-(3-(triméthoxysilyl)propyl)-méthyluréthanne, la N-(3-(triéthoxysilyl)propyl)-urée, la N-(3-triméthoxysilyl)propyl)-urée, le (3-glycidoxypropyl)triéthoxysilane et le (3-glycidoxypropyl)triméthoxysilane.

5. Procédé pour la préparation de compositions de poudres de polymères redispersables dans l'eau, par polymérisation à amorçage radicalaire en milieu aqueux d'un ou plusieurs monomères choisi(s) dans le groupe comprenant des esters vinyliques d'acides alkylcarboxyliques ramifiés ou non ramifiés ayant de 1 à 15 atomes de carbone, des esters d'acide méthacrylique et des esters d'acide acrylique d'alcools ayant de 1 à 15 atomes de carbone, des composés vinylaromatiques, des oléfines, des diènes et des halogénures de vinyle, et séchage subséquent de la dispersion de polymère ainsi obtenue, **caractérisé en ce qu'**après la fin de la polymérisation et avant le séchage de la dispersion de polymère on ajoute un ou plusieurs silanes de formule générale
(RO)₃₋ₙR¹ₙSiR²X (1),
dans laquelle
R représente un radical alkyle, aryle ou alcoxyalkyle éventuellement substitué, ayant de 1 à 10 atomes de carbone,
R¹ représente un radical hydrocarboné éventuellement substitué, ayant de 1 à 12 atomes de carbone,
R² représente un radical alkylène éventuellement substitué, ayant de 1 à 20 atomes de carbone, dans lequel des groupes méthylène non contigus peuvent être remplacés par des groupes -O-,
X représente un radical amino NHR³ ou un radical époxy CR⁴(O)CR⁵R⁶,
R³ représentant un radical alkyle, aryle ou aminoalkyle éventuellement substitué, ayant de 1 à 10 atomes de carbone et
n a la valeur 0, 1, 2 ou 3, et
R⁴, R⁵, R⁶ représentent un atome d'hydrogène ou un radical alkyle ou aryle éventuellement substitué, ayant de 1 à 10 atomes de carbone.

6. Procédé selon la revendication 5, **caractérisé en ce que** les silanes de formule (1) sont disposés au préalable avant la polymérisation ou sont ajoutés pendant la polymérisation.

7. Procédé selon la revendication 5, **caractérisé en ce qu'**après la fin de la polymérisation les silanes de formule (1) sont ajoutés sous forme pure ou sous forme d'une solution aqueuse ou sous forme de dispersion aqueuse à la dispersion de polymère.

8. Utilisation des compositions de poudres de polymères redispersables dans l'eau selon les revendications 1 à 4 dans des produits chimiques pour le bâtiment, en association avec des liants à prise hydraulique tels que les ciments, le plâtre et le verre soluble.

9. Utilisation des compositions de poudres de polymères redispersables dans l'eau selon les revendications 1 à 4, pour la production de colles pour le bâtiment, en particulier de colles pour carreaux et colles calorifuges, de crépis, d'enduits de parement (scim-coat), de mastics, mastics pour sols, matières de nivelage, matériaux d'étanchéité, mortiers à joints, peintures, ainsi que mortier projeté et béton projeté pour des ouvrages du bâtiment et des travaux publics et l'habillage de parois de tunnels.

10. Utilisation des compositions de poudres de polymères redispersables dans l'eau selon les revendications 1 à 4 en tant que colle pour carreaux, pour des carreaux ayant une absorption d'eau de moins de 0,2 % en poids.

11. Utilisation des compositions de poudres de polymères redispersables dans l'eau selon les revendications 1 à 4 en tant que colle pour carreaux, pour des carreaux ayant une absorption d'eau de moins de 0,05 % en poids.
